(19) Europäisches Patentamt
European Patent Office
Office européen des brevets

(11) **EP 4 290 814 B1**

(12) # FASCICULE DE BREVET EUROPEEN

(45) Date de publication et mention
de la délivrance du brevet:
**18.12.2024 Bulletin 2024/51**

(21) Numéro de dépôt: **23175311.2**

(22) Date de dépôt: **25.05.2023**

(51) Classification Internationale des Brevets (IPC):
**H04L 25/02** *(2006.01)* **H04L 27/26** *(2006.01)*

(52) Classification Coopérative des Brevets (CPC):
**H04L 25/0222; H04L 27/2655; H04L 27/26885;
H04L 27/2695**

(54) **PROCÉDÉ ET DISPOSITIF DE SYNCHRONISATION D'UN SIGNAL RADIO NUMÉRIQUE**

VERFAHREN UND VORRICHTUNG ZUR SYNCHRONISATION EINES DIGITALEN FUNKSIGNALS

METHOD AND DEVICE FOR SYNCHRONIZING A DIGITAL RADIO SIGNAL

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **31.05.2022 FR 2205193**

(43) Date de publication de la demande:
**13.12.2023 Bulletin 2023/50**

(73) Titulaire: **Continental Automotive Technologies
GmbH
30175 Hannover (DE)**

(72) Inventeurs:
- **HIVERT, Grégoire
31100 TOULOUSE (FR)**
- **LIN, Chao
31100 TOULOUSE (FR)**

(74) Mandataire: **Continental Corporation France
c/o Continental Automotive France
Service Intellectual Property
1, avenue Paul Ourliac
31100 Toulouse (FR)**

(56) Documents cités:
**JP-A- H09 321 741      US-A1- 2007 258 531
US-A1- 2018 013 598**

- **KIVIRANTA ET AL: "Coarse frame
synchronisation structures in OFDM", ACTS
MOBILE COMMUNICATIONS SUMMIT.
EUROPEAN MOBILE TECHNOLOGYTOWARDS
GLOBAL WIRELESS INFRASTRUCTURE, XX, XX,
27 November 1996 (1996-11-27), pages 464 - 470,
XP002116292**
- **KENICHI TAURA ET AL: "A DIGITAL AUDIO
BROADCASTING (DAB) RECEIVER", 19960801,
vol. 42, no. 3, 1 August 1996 (1996-08-01), pages
322 - 327, XP011008314**
- **LAAR VAN DE F ET AL: "GENERAL-PURPOSE
AND APPLICATION-SPECIFIC DESIGN OF A DAB
CHANNEL DECODER", EBU REVIEW-
TECHNICAL, EUROPEAN BROADCASTING
UNION. BRUSSELS, BE, no. 258, 21 December
1993 (1993-12-21), pages 25 - 35, XP000435122,
ISSN: 0251-0936**

**Description**

Domaine technique

L'invention appartient au domaine des communications numériques, notamment aux techniques de télédiffusion numériques hertziennes, et concerne plus particulièrement un récepteur radio numérique, par exemple un récepteur conforme au standard DAB (Digital Audio Broadcast) pour synchroniser un signal radio numérique en présence de perturbations multitrajets.

Art antérieur

Les systèmes de télédiffusion numériques comme le système DAB utilisent une modulation de type OFDM (pour Orthogonal Frequency Division Multiplex » en anglais).
Dans les systèmes de transmission OFDM, le signal à transmettre est réparti sur un grand nombre de sous-porteuses modulées indépendamment les unes des autres.
Cette technique de modulation est particulièrement efficace dans les situations où l'on rencontre des multitrajets (ou multipath en anglais).
Le multitrajet est un phénomène courant dans les transmissions sans fil. Il se produit lorsqu'un signal radio emprunte différents chemins entre un émetteur et un récepteur, de sorte que le récepteur reçoit plusieurs fois la même information à des instants différents, le signal et ses échos s'additionnant au récepteur avec pour conséquence une atténuation ou une amplification du signal. Le phénomène peut être engendré par la réflexion d'un signal contre des bâtiments ou des montagnes, ou encore lorsque plusieurs émetteurs adjacents diffusent un signal sur une même fréquence.
Les échos provoquent également des interférences dites intra-symbole lorsqu'un symbole est additionné avec le même symbole déphasé, ou des interférences dites inter-symboles lorsqu'un symbole est additionné avec le symbole suivant avec un déphasage.
Le standard DAB, tel que défini dans le standard ETSI EN 300 401, propose des stratégies pour protéger le signal contre ces interférences. Ces stratégies reposent principalement sur l'utilisation d'un intervalle de garde entre la transmission des symboles, dont la durée choisie pour être supérieure au temps d'arrivée du dernier trajet. Toutefois, l'ajout d'intervalles de garde réduit la bande passante utile.
Le décodage OFDM nécessite une synchronisation parfaite de la fréquence du récepteur avec celle de l'émetteur, une déviation en fréquence entraînant une perte de l'orthogonalité des sous-porteuses avec pour conséquence la génération d'interférences entre elles. Pendant la phase d'acquisition de synchronisation, la stratégie classique consiste à détecter le début d'une trame physique en recherchant un symbole de référence, c'est-à-dire d'une séquence pseudo-aléatoire prédéfinie. L'analyse de cette séquence prédéfinie, connue à la fois de l'émetteur et du récepteur, permet de déterminer le décalage de fréquence entre l'oscillateur local du récepteur et celui de l'émetteur.
Cette synchronisation est particulièrement difficile à réaliser lorsque que le récepteur est en mouvement, par exemple lorsqu'il est embarqué dans un véhicule, et en particulier en cas de variation de vitesse, de direction ou si de nombreux échos parasites sont présents.
En présence d'interférences liées au multitrajet, la signature fréquentielle du signal de référence est souvent perturbée et dégradée de sorte que les techniques connues peuvent rejeter la trame ou se synchroniser avec un décalage de fréquence erroné.
Lorsque la synchronisation ne peut pas être effectuée avec succès à la première trame reçue, un récepteur DAB moderne tolère souvent un certain temps d'attente pour effectuer une nouvelle tentative de synchronisation, ou assouplit la stratégie de rejet pour éviter les rejets faussement négatifs. L'inconvénient de ces méthodes est qu'elles peuvent dégrader le temps de décision, c'est-à-dire que le récepteur mettra plus de temps pour établir qu'aucun signal n'est transmis sur une fréquence particulière, ou encore provoquer une synchronisation erronée due à une erreur d'estimation du décalage de fréquence. Cet allongement du temps de décision est préjudiciable à l'expérience utilisateur, notamment en cas de parcours de la bande passante lors d'une recherche de stations. Le document KIVIRANTA ET AL: "Coarse trame synchronisation structures in OFDM",ACTS MOBILE COMMUNICATIONS SUMMIT. EUROPEAN MOBILE TECHNOLOGYTOWARDS GLOBAL WIRELESS INFRASTRUCTURE, 27 novembre 1996 divulgue une trame de synchronisation dans le système DAB. Un symbole nul est détecté, ce qui donne une première estimation de la synchronisation. Puis un symbole de référence spéciale est détecté pour confirmer la synchronisation.
Il existe donc un besoin pour une technique permettant d'améliorer les performances de synchronisation en présence de perturbations multitrajet.

Résumé de l'invention

A cet effet, il est proposé un procédé de synchronisation d'un signal radio numérique reçu par un récepteur radio comprenant les étapes suivantes :

- Détection d'un symbole nul dans le signal,
- Détermination du spectre fréquentiel du signal à partir d'un symbole de référence,
- Détermination, à partir du spectre fréquentiel, d'un indicateur représentatif d'une caractéristique multitrajet du signal comprenant au moins le calcul, sur au moins une bande de fréquence, d'un rapport entre une somme de l'énergie des porteuses dont l'énergie est supérieure l'énergie moyenne des porteuses sur ladite bande de fréquence, et le nombre de porteuses dans la bande de fréquence, et
- Application d'une stratégie de traitement particulière lorsque la valeur de l'indicateur est supérieure ou égale à un premier seuil.

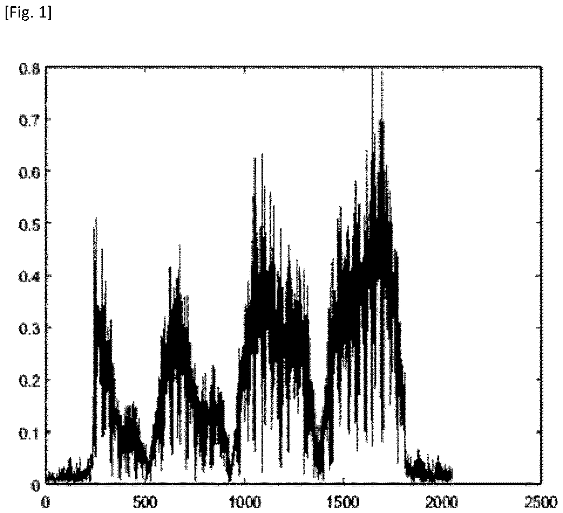

Ainsi, l'invention propose d'obtenir, avant l'étape de synchronisation de fréquence, une information relative à la qualité du signal, notamment en termes de multitrajet, et d'appliquer une stratégie de détection particulière en fonction de l'information obtenue. Lorsqu'un canal de transmission est affecté par une perturbation multitrajet en zone urbaine, les échos sont reçus à bref intervalles, produisant des atténuations courtes comme on peut le voir sur la figure 1. Dans un tel cas, la bande passante cohérente est étroite et la déviation de l'indicateur est importante. Ainsi, lorsque l'indicateur à une valeur supérieure à un seuil particulier, le procédé permet de déduire la présence de perturbations multipath liées à la présence de bâtiments. Il est alors possible d'adapter certains paramètres en appliquant une stratégie de traitement particulière pour améliorer la synchronisation.

Une stratégie particulière peut par exemple comprendre la sélection d'une plage de valeur particulière pour un paramètre permettant d'améliorer le délai synchronisation. De cette façon, le procédé permet une synchronisation plus rapide tout en limitant la complexité des traitements.

Selon un mode particulier de réalisation, le procédé est tel que la stratégie de traitement particulière est appliquée lorsque la valeur de l'indicateur est supérieure ou égale à 35%.

Une valeur de l'indicateur supérieure à 35% est caractéristique d'une bande de cohérence étroite caractéristique d'un multipath urbain.

Selon un mode particulier de réalisation, la stratégie de traitement particulière comprend l'utilisation d'au moins un seuil de corrélation particulier pour la détection d'un symbole dans le domaine temporel.

De cette façon, on augmente la tolérance lors de la détection d'un signal radio numérique. Le seuil de détection est réduit uniquement lorsque l'indicateur indique la présence de multipath, de sorte que la détection est améliorée en cas de perturbations multipath, sans dégrader les performances en l'absence de multipath.

Selon un mode particulier de réalisation, la stratégie de traitement particulière comprend l'utilisation d'au moins un seuil de corrélation particulier pour la détection d'un symbole dans le domaine fréquentiel.

De manière classique, la synchronisation comprend une étape au cours de laquelle un récepteur radio numérique estime une corrélation fréquentielle du signal reçu avec un signal de référence. Cette étape permet à la fois de confirmer la présence d'un signal radio numérique et éventuellement de corriger fréquentiellement le signal.

Lorsque l'indicateur indique la présence de multipath, il est ainsi proposé d'adapter au moins un seuil dans l'étape d'estimation d'une corrélation fréquentielle.

Dans une réalisation particulière, le procédé est tel qu'il comprend en outre les étapes suivantes lorsque la valeur de l'indicateur est inférieure au premier seuil :

- Division du spectre en quatre sous-bandes de même largeur,
- Calcul de l'énergie moyenne des porteuses dans chacune des 4 sous-bandes,
- Application d'une deuxième stratégie de traitement particulière lorsque l'écart entre les moyennes calculées pour au moins deux sous-bandes adjacentes est supérieur à un seuil.

Il est ainsi proposé de mettre en oeuvre un traitement supplémentaire lorsque la valeur de l'indicateur est inférieure au premier seuil. Une telle disposition permet de distinguer une perturbation multipath en milieu rural d'une bruit blanc gaussien. La division de la bande de fréquence en 4 sous bandes permet d'isoler plus efficacement l'atténuation multipath. Par exemple, lorsque la transmission est réalisée sur 1536 porteuses comme dans le cas du standard DAB, il est proposé de définir 4 sous bandes de 384 porteuses.

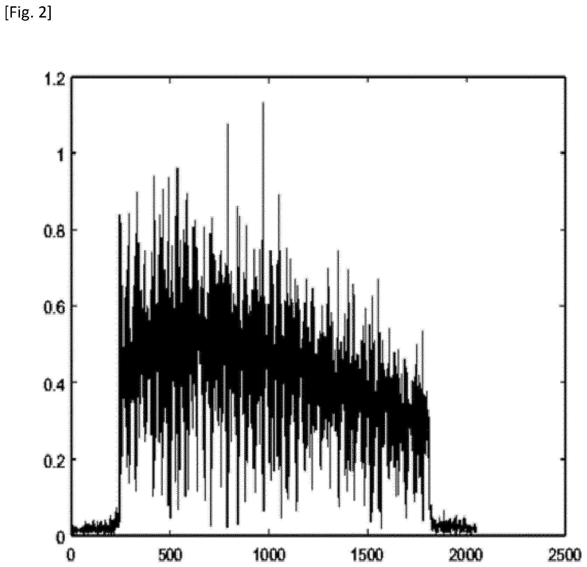

Dans le cas d'interférences multitrajet en zone rurale, la bande passante cohérente est généralement plus longue que la bande passante DAB comme le montre la figure 2. L'écart entre les moyennes calculées pour chacune des 4 sous bandes est alors plus important qu'en cas de bruit blanc ou la moyenne est relativement stable d'une sous-bande à l'autre.

De cette façon, le procédé permet l'application d'une deuxième stratégie de traitement en cas de multipath rural, distincte de la première stratégie, afin d'améliorer encore la synchronisation.

Selon un mode particulier de réalisation, la deuxième stratégie de traitement comprend l'utilisation d'au moins un seuil de corrélation particulier pour la détection d'un symbole dans le domaine temporel et/ou l'utilisation d'au moins un seuil de corrélation particulier pour la détection d'un symbole dans le domaine fréquentiel.

Il est ainsi possible d'adapter les seuils de détection permettant de valider la présence d'un signal en cas de perturbations multipath de type rural.

Selon un autre aspect, il est proposé dispositif de synchronisation d'un signal radio numérique reçu par un récepteur radio, le dispositif comprenant un processeur couplé à une mémoire dans laquelle sont enregistrées des instructions configurées pour mettre en oeuvre les étapes suivantes lorsqu'elles sont exécutées par le processeur :

- Détection d'un symbole nul dans le signal,
- Détermination du spectre fréquentiel du signal à partir d'un symbole de référence,
- Détermination, à partir du spectre fréquentiel, d'un indicateur représentatif d'une caractéristique multitrajet du signal comprenant au moins le calcul, sur au moins une bande de fréquence, d'un rapport entre une somme de l'énergie des porteuses dont l'énergie est supérieure l'énergie moyenne des porteuses sur ladite bande de fréquence, et le nombre de porteuses dans la bande de fréquence, et
- Application d'une stratégie de traitement particulière lorsque la valeur de l'indicateur est supérieure ou égale à un premier seuil.

L'invention se rapporte aussi à un récepteur radio numérique comprenant un dispositif tel que décrit ci-dessus, ainsi qu'à un véhicule comprenant un tel récepteur radio.

Enfin, l'invention concerne un support d'information comportant des instructions de programme d'ordinateur configurées pour mettre en oeuvre les étapes d'un procédé de synchronisation tel que décrit précédemment, lorsque les instructions sont exécutées par un processeur.

Le support d'information peut être un support d'information non transitoire tel qu'un disque dur, une mémoire flash, ou un disque optique par exemple.

Le support d'informations peut être n'importe quelle entité ou dispositif capable de stocker des instructions. Par exemple, le support peut comporter un moyen de stockage, tel qu'une ROM (Read Only Memory), RAM (Random Access Memory), PROM (Programmable Read Only Memory), EPROM (Eraseable Programmable Read Only Memory), un CD ROM ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens.

Alternativement, le support d'informations peut être un circuit intégré dans lequel le programme est incorporé, le circuit étant adapté pour exécuter ou pour être utilisé dans l'exécution des procédés en question.

Les différents modes ou caractéristiques de réalisation précités peuvent être ajoutés indépendamment ou en combinaison les uns avec les autres, aux étapes du procédé de synchronisation. Les véhicules, récepteurs radio, dispositifs, et supports d'information présentent au moins des avantages analogues à ceux conférés par le procédé auquel ils se rapportent.

Brève description des figures

D'autres caractéristiques et avantages de l'invention apparaîtront encore à la lecture de la description qui va suivre. Celle-ci est purement illustrative et doit être lue en regard des dessins annexés sur lesquels :

[Fig. 1] la figure 1 montre un spectre fréquentiel d'un signal en présence de multitrajet de type urbain,

[Fig. 2] la figure 2 montre un spectre fréquentiel d'un signal en présence de multitrajet de type rural,

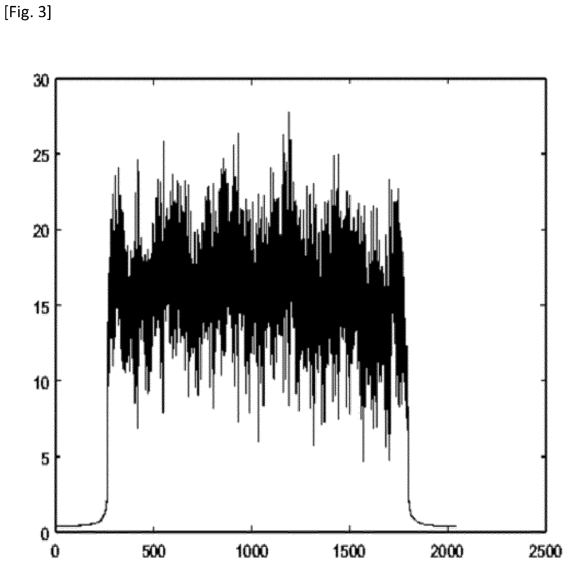

[Fig. 3] la figure 3 montre un spectre fréquentiel d'un signal en présence d'un signal bruité par un bruit blanc,

[Fig. 4] La figure 4 est un ordinogramme représentant les principales étapes d'un procédé de synchronisation selon une réalisation particulière,

[Fig. 5] la figure 5 montre un spectre fréquentiel affecté par une perturbation multipath à atténuation longue sur lequel on a représenté une division en 4 sous-bandes,

[Fig. 6] la figure 6 montre un spectre fréquentiel affecté par une perturbation multipath à atténuation longue sur lequel on a représenté une division en 4 sous-bandes,

[Fig. 7] la figure 7 représente de manière simplifiée une architecture d'un dispositif adapté pour mettre en oeuvre le procédé selon une réalisation particulière.

Description détaillée

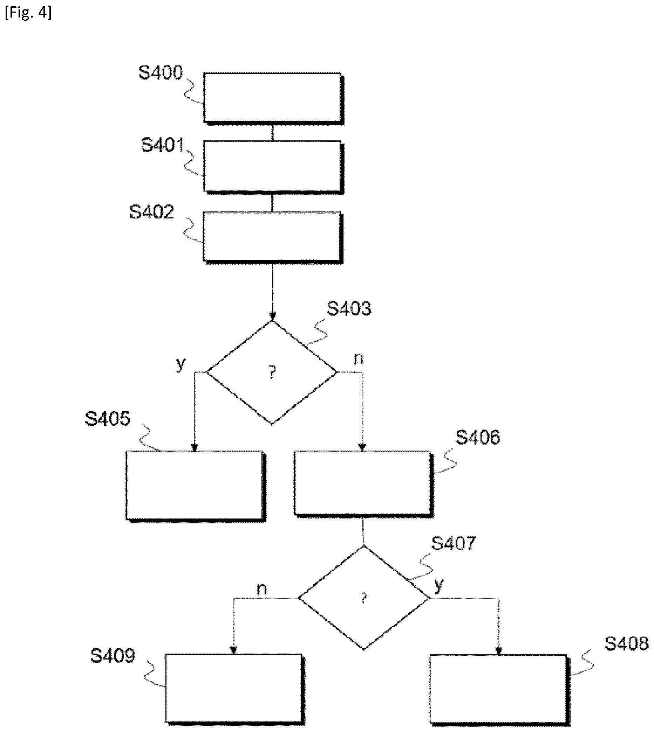

Une réalisation particulière du procédé de synchronisation va maintenant être décrite en référence à la figure 4.

Le procédé est par exemple mis en oeuvre par un récepteur radio numérique, par exemple un récepteur DAB. On note que le procédé en question présente un avantage particulier lorsqu'il est mis en oeuvre par un récepteur radio d'un véhicule, car le déplacement du récepteur complique la phase de synchronisation.

Le procédé comprend une première étape d'acquisition 5400 au cours de laquelle un signal radio est reçu par un tuner. L'étape S400 comprend la détection d'un symbole nul (ou « symbole zéro », ou encore « null symbol » en anglais). Un symbole nul est transmis avant une trame pour permettre la détection du début de la trame. Sa détection peut être réalisée de manière classique, par exemple en vérifiant que la puissance du signal lors de la transmission du symbole nul est faible relativement à la puissance du signal transmis dans la trame associée.

A l'étape S401, le récepteur détermine le spectre fréquentiel du symbole de référence reçu après le symbole nul. Pour cela, le récepteur met en oeuvre par exemple une transformée de Fourrier rapide (FFT pour Fast Fourrier Transform). L'étape S401 peut en outre comprendre une sous-étape de lissage du spectre par application d'un filtre passe-bas, par exemple un filtre dont la fréquence de coupure est déterminée selon la bande de cohérence du signal.

Lors d'une étape S402, il est proposé de déterminer un indicateur $Mp$ représentatif d'une caractéristique multitrajet du signal. Un tel indicateur est calculé à partir de l'analyse spectrale réalisée à l'étape S401 sur l'ensemble des porteuses, c'est-à-dire dans le cas d'une diffusion radio numérique DAB, sur les 1536 porteuses. Plus précisément, le calcul de l'indicateur comprend le calcul d'un rapport entre une somme de l'énergie des porteuses dont l'énergie est supérieure l'énergie moyenne des porteuses sur ladite bande de fréquence, et le nombre de porteuses dans la bande de fréquence :

$$Mp = \left( \frac{\sum_{i=1}^{nbCarrier}\bigl(carriere(i) > \ mean(carrier)\bigr)}{nbCarrier} \right) * 100$$

Avec nbCarrier le nombre de porteuses, par exemple soit 1536 porteuses dans le cas d'une diffusion DAB. L'indicateur peut être ajusté de la façon suivante pour obtenir une valeur en pourcentage :

$$MpAdjusted = (100 - Mp) * 2$$

L'énergie du signal transmis dans une porteuse est par exemple déterminée à partir d'un périodogramme.

A l'étape S403, l'indicateur est comparé à un premier seuil $SMp$ afin de déterminer une caractéristique multipath du signal. Selon un mode de réalisation particulier, un phénomène multipath de type urbain est déterminé lorsque la valeur de l'indicateur est supérieure à 35%. Dans un tel cas, il est proposé de mettre en oeuvre une première stratégie particulière lors d'une étape 5405.

Selon une réalisation particulière, la stratégie mise en oeuvre à l'étape S405 comprend une configuration particulière d'un seuil pour la détection, dans le domaine temporel, du début d'un symbole. Le seuil est configuré pour augmenter la tolérance lors de la détection. Ainsi, le seuil peut être diminué de 50% par rapport à une valeur configurée classiquement en l'absence de multipath.

Selon un mode de réalisation particulier, la stratégie mise en oeuvre à l'étape S405 comprend une configuration particulière d'un ou plusieurs seuils particuliers lors de la recherche d'une corrélation, dans le domaine fréquentiel, entre le signal reçu et un signal de référence connu. Plus précisément, les seuils permettant d'établir qu'il existe une corrélation entre le signal reçu et le signal de référence sont abaissés de 15% de sorte qu'un écart plus important par rapport au signal de référence est toléré pour valider la détection d'un signal DAB.

Lorsqu'à l'étape S403 il est déterminé que la valeur de l'indicateur est inférieure au seuil $SMp$, il est proposé de mettre en oeuvre une étape S406. L'étape S406 est ainsi mise en oeuvre en l'absence de multipath de type urbain. Autrement dit, lorsque l'indicateur $Mp$ est inférieur au seuil $SMp$, on peut soit être en présence d'un multipath à atténuation longue, de type rural, ou d'un bruit blanc gaussien. Les étapes 5406 et suivantes visent par conséquent à déterminer si l'on est en présence d'un multipath rural ou bien d'un bruit blanc gaussien afin d'améliorer la synchronisation en adaptant le traitement.

Pour cela, l'étape S406 comprend la division du spectre en 4 sous-bandes de même largeur. Par exemple, le spectre DAB comprenant 1536 porteuses est divisé en quatre sous-bandes comprenant chacune 384 porteuses. Sachant qu'une porteuse DAB s'étale sur 1KHz, une telle disposition permet de cibler une bande de cohérence autour de 384KHz.

Il est ensuite proposé de calculer une moyenne de l'énergie transmise dans chacune des quatre sous-bandes ainsi définies, par exemple à partir d'un périodogramme permettant d'obtenir une densité spectrale de puissance.

A l'étape S407, on calcule un indicateur de disparité des moyennes calculées pour chaque sous-bande. Par exemple, on peut calculer l'écart-type de l'énergie moyenne calculée pour chacune des quatre sous bandes définies, et on compare cet indicateur de dispersion à un seuil.

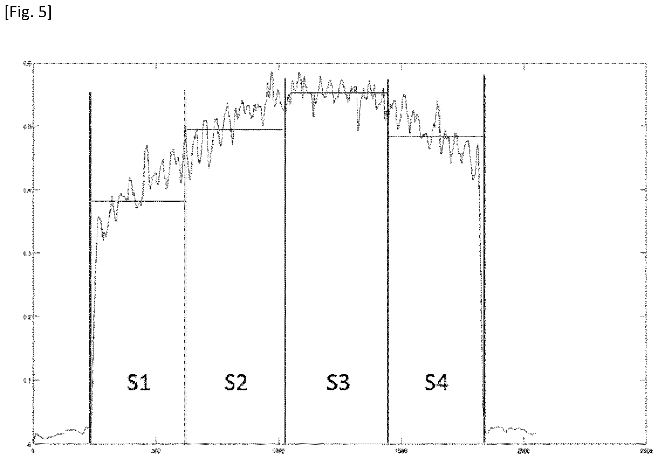

Dans le cas d'interférences multitrajet en zone rurale, la bande passante cohérente est généralement plus longue que la bande passante DAB. Ainsi, l'écart entre les moyennes calculées pour chacune des 4 sous bandes est plus important qu'en cas de bruit blanc ou la moyenne est relativement stable d'une sous-bande à l'autre. Par exemple, la figure 5 montre un spectre correspondant à une transmission affectée par un phénomène multipath de type rural sur lequel on a représenté les quatre sous bandes S1-S4 définies à l'étape S406, ainsi que l'énergie moyenne du signal transmis dans ces sous-bandes, sous forme d'un histogramme. On remarque que l'atténuation longue qui affecte le signal produit une disparité dans l'énergie de chaque sous-bande. Autrement dit, on note un écart important dans les moyennes calculées pour deux sous-bandes adjacentes.

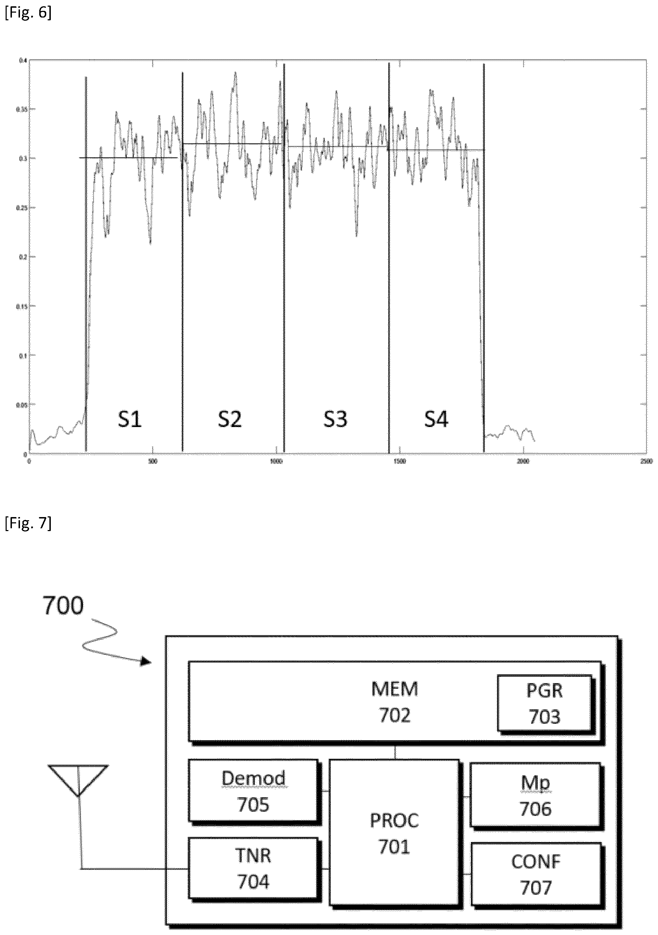

A l'inverse, la figure 6 montre un spectre correspondant à une transmission affectée par un bruit blanc gaussien sur lequel on a également représenté quatre sous-bandes S1-S4 ainsi que l'énergie moyenne du signal dans chacune de ces sous-bandes sous forme d'un histogramme. On remarque que l'énergie moyenne varie très peu dans les différentes sous bandes.

Ainsi, la dispersion de l'énergie moyenne transmise dans chaque sous bande est un indicateur permettant de distinguer une transmission affectée par un multipath de type rural d'une transmission affectée par un bruit blanc gaussien.

Ainsi, lorsqu'il est déterminé à l'étape S407 que la disparité entre les moyennes calculées pour chaque sous-bande est supérieure ou égale à un seuil, le procédé met en oeuvre une étape S408 au cours de laquelle est appliquée une deuxième stratégie particulière adaptée pour optimiser la synchronisation dans un contexte multipath de type rural. La troisième stratégie comprend l'utilisation d'au moins un seuil de corrélation particulier pour la détection d'un symbole dans le domaine temporel et/ou l'utilisation d'au moins un seuil de corrélation particulier pour la détection d'un symbole dans le domaine fréquentiel.

Les seuils configurés dans la troisième stratégie peuvent se rapporter aux mêmes paramètres que les seuils configurés dans la première stratégie mise en oeuvre en présence de multipath urbain. Toutefois, les valeurs de seuils sont configurées à un niveau intermédiaire entre les valeurs utilisée par défaut et les valeurs configurées pour la première stratégie. Par exemple, en cas de multipath rural, un seuil de détection peut être réduit d'environ 20% afin d'être plus tolérant et de 50 % en cas de multipath urbain.

Lorsqu'il est déterminé à l'étape S407 que la disparité entre les moyennes calculées pour chaque sous-bande est inférieure à un seuil, le procédé permet de conclure en l'absence de perturbations multipath. Il est alors proposé d'appliquer une troisième stratégie selon laquelle les seuils configurés aux étapes S405 et S408 sont configurés avec un niveau de tolérance minimum. En effet, en absence de multipath, il n'y a pas de problème de corrélation lors de la recherche de symboles dans le signal. La phase de synchronisation n'est pas affectée et les seuils peuvent être configurés à un niveau assurant un niveau d'acceptation plus stricte que dans les premières et troisièmes stratégies.

Le procédé permet ainsi avantageusement d'optimiser la procédure de synchronisation selon le contexte multipath détecté. Contrairement à l'art antérieur, la tolérance est augmentée uniquement lorsqu'un phénomène multipath est détecté.

Plus précisément, le procédé permet de déterminer si une transmission est affectée par un phénomène multipath de type Rural, de type Urbain ou bien si elle est affectée par un bruit blanc gaussien. Le procédé propose en outre d'appliquer une stratégie particulière selon le type de perturbation identifié. Une stratégie particulière comprend par exemple une configuration particulière de certains seuils utilisés pour la détection d'un début de trame, dans le domaine temporel et dans le domaine fréquentiel, les critères d'acceptation étant assouplis en présence de multipath rural, et encore plus assouplis en présence de multipath urbain. Autrement dit, les critères de détection sont moins stricts en présence de multipath rural, et encore moins stricts en présence de multipath urbain.

La figure 7 représente l'architecture d'un dispositif 700 adapté pour mettre en oeuvre le procédé de synchronisation selon une réalisation particulière.

Le dispositif 700 comprend un processeur 701 couplé à une mémoire 702, par exemple une mémoire RAM, dans laquelle sont enregistrées des instructions de programme 703 adaptées pour mettre en oeuvre les étapes du procédé. Un tel dispositif est par exemple intégré à un récepteur radio numérique d'un véhicule.

À l'initialisation, les instructions de programme 703 sont chargées dans la mémoire 702 avant d'être exécutées par le processeur 701. Le processeur 701 met en oeuvre les étapes du procédé de synchronisation selon les instructions du programme 703.

Pour cela, le dispositif 700 comprend un tuner 704 adapté pour recevoir un signal de radio numérique, par exemple un signal conforme à un standard de radio numérique terrestre (RNT), par exemple DAB (Digital Audio Broadcast).

Le dispositif 700 comprend également un démodulateur 705. Le démodulateur 705 est configuré pour détecter un symbole nul et acquérir un symbole de référence dans le signal reçu par le tuner 704. Le démodulateur est en outre configuré par des instructions de programme adaptées pour déterminer un spectre fréquentiel du signal acquis à partir d'une transformée de Fourrier.

Le dispositif 700 comprend un module 706 de détermination d'une caractéristique multipath à partir du spectre déterminé par le démodulateur 705. Pour cela, le module 706 peut être mis en oeuvre par des instructions de programme arrangées déterminer un indicateur représentatif d'une caractéristique multipath su signal. Pour cela, les instructions de programme sont configurées pour calculer, sur au moins une bande de fréquence, un rapport entre une somme de l'énergie des porteuses dont l'énergie est supérieure l'énergie moyenne des porteuses sur ladite bande de fréquence, et le nombre de porteuses dans la bande de fréquence.

Le dispositif 700 comprend aussi un module de configuration 707 adapté pour mettre en oeuvre une stratégie de détection particulière lorsque l'indicateur déterminé est supérieur à un seuil, par exemple à 35%. Selon une réalisation particulière, la stratégie mise en oeuvre comprend un assouplissement des seuils de détection d'un début de trame et/ou un assouplissement des seuils permettant d'établir une corrélation entre le spectre d'un signal de référence connu et le spectre du signal reçu. Selon une réalisation particulière, module de configuration est en outre adapté pour mettre en oeuvre une deuxième stratégie de traitement lorsque la valeur de l'indicateur est inférieure au seuil mais supérieur à un deuxième seuil, par exemple lorsque la valeur de l'indicateur est comprise entre 12% et 35%. Cette deuxième stratégie peut comprendre un assouplissement de moindre mesure des seuils de détection discutés ci-avant.

Selon un mode particulier de réalisation, le dispositif de synchronisation est intégré dans un récepteur radio numérique d'un véhicule, par exemple un autoradio.

## Revendications

1. Procédé de synchronisation d'un signal radio numérique reçu par un récepteur radio comprenant les étapes suivantes :

   - Détection (S400) d'un symbole nul dans le signal,
   - Détermination (S401) du spectre fréquentiel du signal à partir d'un symbole de référence,
   - Détermination (S402), à partir du spectre fréquentiel, d'un indicateur représentatif d'une caractéristique multitrajet du signal comprenant au moins le calcul, sur au moins une bande de fréquence, d'un rapport entre une somme de l'énergie des porteuses dont l'énergie est supérieure l'énergie moyenne des porteuses sur ladite bande de fréquence, et le nombre de porteuses dans la bande de fréquence, et
   - Application (S405) d'une stratégie de traitement particulière lorsque la valeur de l'indicateur est supérieure ou égale à un premier seuil.

2. Procédé selon la revendication 1 dans lequel la stratégie de traitement particulière est appliquée lorsque la valeur de l'indicateur est supérieure ou égale à 35%.

3. Procédé selon l'une quelconque des revendications précédentes dans lequel la stratégie de traitement particulière comprend l'utilisation d'au moins un seuil de corrélation particulier pour la détection d'un symbole dans le domaine temporel.

4. Procédé selon l'une quelconque des revendications précédentes dans lequel la stratégie de traitement particulière comprend l'utilisation d'au moins un seuil de corrélation particulier pour la détection d'un symbole dans le domaine fréquentiel.

5. Procédé selon l'une quelconque des revendications précédentes tel qu'il comprend en outre les étapes suivantes, lorsque la valeur de l'indicateur est inférieure au premier seuil :

   - Division du spectre en quatre sous-bandes de même largeur,
   - Calcul de l'énergie moyenne des porteuses dans chacune des 4 sous-bandes,
   - Application d'une deuxième stratégie de traitement particulière lorsque l'écart entre les moyennes calculées pour au moins deux sous-bandes adjacentes est supérieur à un seuil.

6. Procédé selon la revendication 5 dans lequel la deuxième stratégie de traitement comprend l'utilisation d'au moins un seuil de corrélation particulier pour la détection d'un symbole dans le domaine temporel et/ou l'utilisation d'au moins un seuil de corrélation particulier pour la détection d'un symbole dans le domaine fréquentiel.

7. Dispositif de synchronisation d'un signal radio numérique reçu par un récepteur radio, le dispositif comprenant un processeur (701) couplé à une mémoire (702) dans laquelle sont enregistrées des instructions (703) configurées pour mettre en oeuvre les étapes suivantes lorsqu'elles sont exécutées par le processeur :

- Détection d'un symbole nul dans le signal,
- Détermination du spectre fréquentiel du signal à partir d'un symbole de référence,
- Détermination, à partir du spectre fréquentiel, d'un indicateur représentatif d'une caractéristique multitrajet du signal comprenant au moins le calcul, sur au moins une bande de fréquence, d'un rapport entre une somme de l'énergie des porteuses dont l'énergie est supérieure l'énergie moyenne des porteuses sur ladite bande de fréquence, et le nombre de porteuses dans la bande de fréquence, et
- Application d'une stratégie de traitement particulière lorsque la valeur de l'indicateur est supérieure ou égale à un premier seuil.

8. Récepteur radio numérique comprenant un dispositif selon la revendication 7.

9. Véhicule comprenant un récepteur radio numérique selon la revendication 8.

10. Support d'information comportant des instructions de programme d'ordinateur configurées pour mettre en oeuvre les étapes d'un procédé de synchronisation selon l'une quelconque des revendications 1 à 6, lorsque les instructions sont exécutées par un processeur.

**Patentansprüche**

1. Verfahren zur Synchronisierung eines digitalen Funksignals, das von einem Funkempfänger empfangen wird, beinhaltend die folgenden Schritte:

- Detektieren (S400) eines Nullsymbols in dem Signal,
- Bestimmen (S401) des Frequenzspektrums des Signals anhand eines Referenzsymbols,
- Bestimmen (S402), anhand des Frequenzspektrums, eines Indikators, der für eine Mehrwegeigenschaft des Signals repräsentativ ist, mindestens beinhaltend das Berechnen, für mindestens ein Frequenzband, eines Verhältnisses zwischen einer Summe der Energie der Träger, deren Energie größer als die mittlere Energie der Träger in dem Frequenzband ist, und der Anzahl von Trägern in dem Frequenzband, und
- Anwenden (S405) einer bestimmten Verarbeitungsstrategie, wenn der Wert des Indikators größer als oder gleich einem ersten Schwellenwert ist.

2. Verfahren nach Anspruch 1, wobei die bestimmte Verarbeitungsstrategie angewendet wird, wenn der Wert des Indikators größer als oder gleich 35 % ist.

3. Verfahren nach einem der vorhergehenden Ansprüche, wobei die bestimmte Verarbeitungsstrategie die Verwendung mindestens eines bestimmten Korrelationsschwellenwerts für die Detektion eines Symbols im Zeitbereich beinhaltet.

4. Verfahren nach einem der vorhergehenden Ansprüche, wobei die bestimmte Verarbeitungsstrategie die Verwendung mindestens eines bestimmten Korrelationsschwellenwerts für die Detektion eines Symbols im Frequenzbereich beinhaltet.

5. Verfahren nach einem der vorhergehenden Ansprüche, derart, dass es ferner die folgenden Schritte beinhaltet, wenn der Wert des Indikators kleiner als der erste Schwellenwert ist:

- Unterteilen des Spektrums in vier Subbänder gleicher Breite,
- Berechnen der mittleren Energie der Träger in jedem der 4 Subbänder,
- Anwenden einer zweiten bestimmten Verarbeitungsstrategie, wenn der Abstand zwischen den Mittelwerten, die für mindestens zwei benachbarte Subbänder berechnet werden, größer als ein Schwellenwert ist.

**6.** Verfahren nach Anspruch 5, wobei die zweite Verarbeitungsstrategie die Verwendung mindestens eines bestimmten Korrelationsschwellenwerts für die Detektion eines Symbols im Zeitbereich und/oder die Verwendung mindestens eines bestimmten Korrelationsschwellenwerts für die Detektion eines Symbols im Frequenzbereich beinhaltet.

**7.** Vorrichtung zur Synchronisierung eines digitalen Funksignals, das von einem Funkempfänger empfangen wird, wobei die Vorrichtung einen Prozessor (701) beinhaltet, der mit einem Speicher (702) gekoppelt ist, in dem Anweisungen (703) gespeichert sind, die dazu konfiguriert sind, die folgenden Schritte umzusetzen, wenn sie durch den Prozessor ausgeführt werden:

- Detektieren eines Nullsymbols in dem Signal,
- Bestimmen des Frequenzspektrums des Signals anhand eines Referenzsymbols,
- Bestimmen, anhand des Frequenzspektrums, eines Indikators, der für eine Mehrwegeigenschaft des Signals repräsentativ ist, mindestens beinhaltend das Berechnen, für mindestens ein Frequenzband, eines Verhältnisses zwischen einer Summe der Energie der Träger, deren Energie größer als die mittlere Energie der Träger in dem Frequenzband ist, und der Anzahl von Trägern in dem Frequenzband, und
- Anwenden einer bestimmten Verarbeitungsstrategie, wenn der Wert des Indikators größer als oder gleich einem ersten Schwellenwert ist.

**8.** Digitaler Funkempfänger, der eine Vorrichtung nach Anspruch 7 beinhaltet.

**9.** Fahrzeug, das einen digitalen Funkempfänger nach Anspruch 8 beinhaltet.

**10.** Informationsträger, der Computerprogrammanweisungen umfasst, die dazu konfiguriert sind, die Schritte eines Synchronisierungsverfahrens nach einem der Ansprüche 1 bis 6 umzusetzen, wenn die Anweisungen durch einen Prozessor ausgeführt werden.


**Claims**

**1.** Method for synchronizing a digital radio signal received by a radio receiver, comprising the following steps:

- detecting (S400) a null symbol in the signal,
- determining (S401) the frequency spectrum of the signal on the basis of a reference symbol,
- determining (S402), on the basis of the frequency spectrum, an indicator which is representative of a multipath characteristic of the signal, comprising at least calculating, over at least one frequency band, a ratio between a sum of the energy of the carriers, whose energy is greater than the average energy of the carriers over said frequency band, and the number of carriers in the frequency band, and
- applying (S405) a particular processing strategy when the value of the indicator is above or equal to a first threshold.

**2.** Method according to Claim 1, wherein the particular processing strategy is applied when the value of the indicator is greater than or equal to 35%.

**3.** Method according to either one of the preceding claims, wherein the particular processing strategy comprises using at least one particular correlation threshold for detecting a symbol in the time domain.

**4.** Method according to any one of the preceding claims, wherein the particular processing strategy comprises using at least one particular correlation threshold for detecting a symbol in the frequency domain.

**5.** Method according to any one of the preceding claims, such that it further comprises the following steps, when the value of the indicator is below the first threshold:

- dividing the spectrum into four sub-bands of the same width,
- calculating the average energy of the carriers in each of the 4 sub-bands,
- applying a second particular processing strategy when the difference between the averages which are calculated for at least two adjacent sub-bands is above a threshold.

**6.** Method according to Claim 5, wherein the second processing strategy comprises using at least one particular correlation threshold for detecting a symbol in the time domain and/or using at least one particular correlation threshold for detecting a symbol in the frequency domain.

7. Device for synchronizing a digital radio signal received by a radio receiver, the device comprising a processor (701) coupled to a memory (702) in which instructions (703) are stored which are configured to implement the following steps when they are executed by the processor:

- detecting a null symbol in the signal,
- determining the frequency spectrum of the signal on the basis of a reference symbol,
- determining, on the basis of the frequency spectrum, an indicator which is representative of a multipath characteristic of the signal, comprising at least calculating, over at least one frequency band, a ratio between a sum of the energy of the carriers, whose energy is greater than the average energy of the carriers over said frequency band, and the number of carriers in the frequency band, and
- applying a particular processing strategy when the value of the indicator is above or equal to a first threshold.

8. Digital radio receiver comprising a device according to Claim 7.

9. Vehicle comprising a digital radio receiver according to Claim 8.

10. Information medium comprising computer program instructions which are configured to implement the steps of a synchronization method according to any one of Claims 1 to 6 when the instructions are executed by a processor.

[Fig. 1]

[Fig. 2]

[Fig. 3]

[Fig. 4]

[Fig. 5]

[Fig. 6]

[Fig. 7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KIVIRANTA et al.** Coarse trame synchronisation structures in OFDM. *ACTS MOBILE COMMUNICATIONS SUMMIT. EUROPEAN MOBILE TECHNOLOGYTOWARDS GLOBAL WIRELESS INFRASTRUCTURE,* 27 Novembre 1996